# EUROPEAN PATENT APPLICATION

(11) **EP 3 112 060 A1**
(43) Date of publication of application: **04.01.2017**
(21) Application number: 15754795.1
(22) Date of filing: 20.02.2015
(51) Int. Cl.: B23B 1/00, B23B 27/16

(54) **MACHINE TOOL**

(30) Priority: 27.02.2014 JP 2014036704
(71) Applicant: Murata Machinery, Ltd., Kyoto-shi, Kyoto 601-8326 (JP); Sumitomo Electric Hardmetal Corp., Itami-shi, Hyogo 664-0016 (JP)
(72) Inventor: ISHIHARA, Tadashi, Inuyama-shi Aichi 484-8502 (JP); TANAKA, Kunishige, Itami-shi Hyogo 664-0016 (JP)
(74) Representative: Zimmermann, Tankred Klaus
(86) International application number: PCT/JP2015/054745
(87) International publication number: WO 2015/129567

(57) **Abstract**

[Problem] To accurately set the orientation of a linear cutting blade when mounting a cutting tool and to reduce the production cost of a holder, the cutting tool, and the like.

[Solving Means] A machine tool includes a moving device (M1 to M3) that moves a rectangular plate-shaped cutting tool T1 provided with a linear cutting blade Th in a Y-direction of a Z-direction, the Y-direction, and a Z-direction, or in a combined direction of the Y-direction and the Z-direction, the Z-direction being parallel with the axis of a main spindle 7 for holding a workpiece W, the X-direction being perpendicular to the Z-direction and determining the amount of cutting of the workpiece W, the Y-direction being perpendicular to the Z-direction and the X-direction, and a holder 25 that holds the cutting tool T1 in a state in which the orientation of the linear cutting blade Th is inclined with respect to the Z-direction when seen from the X-direction. The holder 25 has a first reference surface 26a that is in contact with a first surface Ta parallel with a linear cutting blade Th, of the side surfaces of the cutting tool T1 and is parallel with the YZ-plane or a plane tangent to the peripheral surface of the workpiece W and a second reference surface 26b that is in contact with a second surface Tb intersecting the first surface Ta. The workpiece W is cut while moving the linear cutting blade Th in the Y-direction or the combined direction.

## Description

### Technical Field

The present invention relates to a machine tool that cuts a workpiece.

### Background Art

A lathe, which is one of machine tools, holds a workpiece to be machined, on the rotation axis (spindle) and performs cutting or the like on the workpiece using a machining tool, such as a cutting tool, while rotating the workpiece (see Patent Literature 1). As a machining method using a lathe, for example, there is known a machining method of cutting a workpiece while feeding a cutting tool in the tangential direction of a workpiece (a direction crossing the rotation axis). In this machining method, a triangular or rectangular cutting tool provided with a linear cutting blade is used with it mounted on a holder. When the workpiece is cut as described above with the linear cutting blade inclined with respect to a plane parallel with the rotation axis of the workpiece (a plane including the generating line of the workpiece), a gradient corresponding to the inclination would be formed in the workpiece. For this reason, the machine tool must be fixed in such a manner that the linear cutting blade is along the plane parallel with the rotation axis of the workpiece.

For example, a triangular cutting tool is mounted on a holder in such a manner that two of the side surfaces of the cutting tool are in contact with two reference surfaces of the holder. In this configuration, the reference surfaces of the holder are inclined with respect to the linear cutting blade and therefore the linear cutting blade is difficult to position accurately. For this reason, the holder is typically provided with an adjustment mechanism for adjusting the orientation of the linear cutting blade of the cutting tool mounted on the holder. On the other hand, the following rectangular cutting tool is proposed: the cutting tool is positioned with respect to a holder by engaging a keyway formed on a side surface of the cutting tool with a protrusion of the holder; and the cutting tool is fixed in such a manner that the side surface of the cutting tool is contacted with the reference surface of the holder and thus the orientation of the linear cutting blade is along a plane parallel with the rotation axis.

### Citation List

### Patent Literature

[Patent Literature 1] Japanese Patent No. 2701706

### Summary of Invention

### Technical Problem

As described above, the method of cutting the workpiece while feeding the cutting tool requires positioning and fixing the cutting tool with respect to the holder in such a manner that the linear cutting blade is along the plane parallel with the rotation axis. Further, the above cutting method involves cutting the workpiece while moving the cutting tool in the tangential direction of the workpiece. This increases the reaction force acting on the cutting tool during cutting and therefore the holder must strongly hold the cutting tool. In the case of a conventional rectangular cutting tool, a side surface of the cutting tool is contacted with the reference surface of a holder so that the orientation of the linear cutting blade is accurately set, and the cutting tool is fixed to the holder in multiple positions (e.g., two positions) using bolts so that the cutting tool is strongly held by the holder. However, fixing the cutting tool in multiple positions involves a problem that it takes time and effort to replace the cutting tool. Further, a keyway for positioning with respect to the holder is formed in the cutting tool. This increases the production cost along with the formation of a protrusion on the holder, and the like.

The present invention has been made in view of the foregoing, and an object thereof is to provide a machine tool that allows a cutting tool to be easily mounted on a holder, allows the orientation of a linear cutting blade to be accurately set during the mounting, and allows for a reduction in the production cost of the holder, cutting tool, and the like.

### Solution to Problem

The present invention provides a machine tool including a main spindle configured to rotate while holding a workpiece, a moving device configured to move a rectangular plate-shaped cutting tool relative to the workpiece at least in a Y-direction of a Z-direction, the Y-direction, and an X-direction or in a combined direction of the Y-direction and the Z-direction, the cutting tool being provided with a linear cutting blade for cutting the workpiece, the Z-direction being parallel with an axis of the main spindle, the X-direction being perpendicular to the Z-direction and determining the amount of cutting of the workpiece, the Y-direction being perpendicular to the Z-direction and the X-direction, and a holder holding the cutting tool in a state in which an orientation of the linear cutting blade is inclined with respect to the Z-direction when seen from the X-direction. The holder has a first reference surface and a second reference surface, the first reference surface being in contact with a first surface parallel with the linear cutting blade, of side surfaces of the cutting tool provided with the linear cutting blade, the first reference surface being parallel with a YZ-plane or a plane tangent to a cylindrical surface of the workpiece, the second reference surface being in contact with a second surface intersecting the first surface, of the side surfaces of the cutting tool. The workpiece is cut while moving the linear cutting blade along the YZ-plane or the plane parallel with the plane tangent to the cylindrical surface of the workpiece at least in the Y-direction or in the combined direction using the moving device.

At least one of the first reference surface and the second reference surface may be disposed in a position that receives a reaction force when cutting the workpiece. The holder may be held over a tool post with a tool head therebetween, the tool post being moved by the moving device, and has a third reference surface in contact with the tool head. The third reference surface may be disposed so as to correspond to the first reference surface. The third reference surface may be disposed in parallel with or perpendicularly to the first reference surface. The holder may be provided with a bolt for fixing the cutting tool, and the cutting tool may have a larger through hole than a diameter of a thread of the bolt.

### Advantageous Effects of the Invention

According to the present invention, the first surface of the cutting tool is in contact with the first reference surface of the holder, and the second surface of the cutting tool is in contact with the second reference surface of the holder. Thus, it is possible to easily position the cutting tool with respect to the holder and to accurately set the orientation of the linear cutting blade along the plane parallel with the rotation axis. Further, the cutting tool can be easily mounted on the holder. Since there is no need to form a keyway, protrusion, or the like in the cutting tool or holder but rather a simple configuration is employed, the production cost of the holder, cutting tool, and the like can be reduced.

In the case of the configuration in which at least one of the first reference surface and the second reference surface is disposed in a position that receives a reaction force when cutting the workpiece, at least one of the first reference surface and second reference surface supports the reaction force of the cutting tool that acts when cutting the workpiece. Thus, the misalignment of the cutting tool can be prevented. In the case of the configuration in which the holder is held over the tool post with the tool head therebetween, the tool post being moved by the moving device, the third reference surface of the holder is disposed so as to correspond to the first reference surface. Thus, the cutting tool can be easily positioned by mounting the holder on the tool head. In the case of the configuration in which the third reference surface is disposed parallel with or perpendicular to the first reference surface, the positional relationship between the holder mounted on the tool head and the linear cutting blade of the cutting tool is easily set. Thus, the production cost of the holder and the like can be reduced. In the case of the configuration in which the cutting tool has the larger through hole than the diameter of the thread of the bolt of the holder, it is possible to contact the first surface and second surface of the cutting tool with the first reference surface and second reference surface, respectively, even when the external shape of the cutting tool varies to some extent. Further, by fastening the bolt in this state, the cutting tool can be easily mounted on the holder.

### Brief Description of the Drawings

Fig. 1 includes diagrams showing an example of a major part of a machine tool of a first embodiment, in which Fig. 1(a) is a side view; and Fig. 1(b) is a front view.
Fig. 2 is an enlarged perspective view showing a part corresponding to a workpiece.
Fig. 3 is a perspective view showing an example of a state in which a holder is mounted on a tool head.
Fig. 4(a) is a perspective view showing an example of a cutting tool; Fig. 4(b) is a perspective view showing an example of the holder; and Fig. 4(c) is a diagram showing a force acting on the cutting tool during cutting.
Fig. 5(a) is a diagram showing an example of the operation of the cutting tool when the workpiece is seen from the X-direction, and Fig. 5(b) is a diagram showing an example of the operation of the cutting tool when the workpiece is seen from the Z-direction.
Fig. 6 is a diagram showing another example of the operation of the cutting tool when the workpiece is seen from the X-direction.
Fig. 7 includes diagrams showing an example of a major part of a machine tool of a second embodiment, in which Fig. 7 (a) is a perspective view showing an example of a cutting tool and a holder; and Fig. 7(b) is a perspective view showing an example of the holder.

### Description of Embodiments

Now, embodiments of the present invention will be described with reference to the drawings. However, the present invention is not limited thereto. To clarify the embodiments, the drawings are scaled, for example, partially enlarged or highlighted, as necessary. In the drawings, directions are shown by an XYZ coordinate system. In the XYZ coordinate system, a plane parallel with the horizontal plane is defined as a YZ-plane. The direction of the rotation axis of a main spindle 7 (counter spindle 8) in the YZ-plane is defined as a Z-direction, and a direction perpendicular to the Z-direction is defined as a Y-direction. A direction perpendicular to the YZ-plane is defined as an X-direction. The X-axis is a direction perpendicular to the Z-direction and determines the amount of cutting of a workpiece. In the drawings, directions shown by arrows are the positive directions of the X-, Y-, and Z-directions, and opposite directions are the negative directions thereof.

### First Embodiment

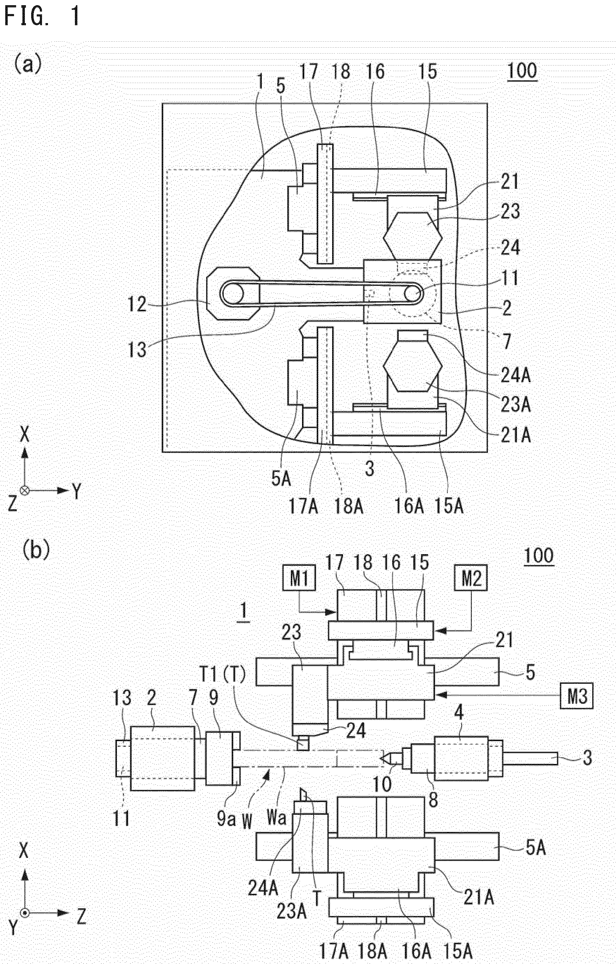

A machine tool 100 of a first embodiment will be described with reference to the drawings. Fig. 1 includes diagrams showing an example of a major part of the machine tool 100 of the first embodiment, in which Fig. 1(a) is a side view; and Fig. 1(b) is a front view. The machine tool 100 shown in Fig. 1 is a lathe. In Fig. 1, the front side of the machine tool 100 is located on the positive Y side, and the back side thereof is located on the negative Y side. The lateral sides of the machine tool 100 are located on the positive and negative Z sides, and the Z-direction represents the horizontal direction of the machine tool 100.

As shown in Fig. 1, the machine tool 100 includes a base 1. The base 1 includes a headstock 2 and a tailstock 4. The headstock 2 rotatably supports a main spindle 7 with a bearing or the like (not shown) therebetween. While the headstock 2 is fixed to the base 1, it may be formed so as to be movable in the Z, X, Y, or other directions by driving a motor or the like. The main spindle 7 has a chuck drive unit 9 at the positive-Z-side end thereof. The chuck drive unit 9 causes multiple grasping claws 9a to move in the radial direction of the main spindle 7 and to hold a workpiece W. While, in Fig. 1, the workpiece W is grasped by three grasping claws 9a equally spaced around the rotation axis of the main spindle 7, other configurations may be employed. The number or shape of the grasping claws 9a may be any number or shape as long as they can hold the workpiece W. The workpiece W to be held by the grasping claws 9a is formed in a shape having a cylindrical surface Wa (e.g., a cylindrical shape).

The negative-Z-side end of the main spindle 7 protrudes from the headstock 2 in the negative Z-direction and has a pulley 11 mounted thereon. A belt 13 runs between the pulley 11 and the rotation axis of a motor 12 disposed in the base 1. Thus, the main spindle 7 is rotated by the drive of the motor 12 through the belt 13. The number of revolutions or the like of the motor 12 is controlled in accordance with an instruction from a controller (not shown). The motor 12 is, for example, a motor including a torque control mechanism. The main spindle 7 need not be driven by the motor 12 and belt 13; the drive of the motor 12 may be transmitted to the main spindle 7 through a gear train or the like, or the motor 12 may directly rotate the main spindle 7.

The tailstock 4 is formed so as to be movable along a Z-direction guide 3 disposed on the base 1. The tailstock 4 rotatably supports the counter spindle 8 with a bearing or the like (not shown) therebetween. The directions of the rotation axes of the main spindle 7 and counter spindle 8 are both the Z-direction. The tailstock 4 has a center 10 mounted on the negative-Z-side end thereof.

As shown by a dot-and-dash line in Fig. 1(b), if the workpiece W has a long length (is long in the Z-direction), the positive-Z-side end of the workpiece W is held by the center 10 of the tailstock 4. Thus, the long workpiece is rotated with it sandwiched between the main spindle 7 and counter spindle 8. As a result, the workpiece W can be rotated stably during cutting. If the workpiece W has a short length (is short in the Z-direction), it is rotated with it held by only the grasping claws 9a of the main spindle 7. In this case, the tailstock 4 need not be used.

As shown in Figs. 1(a) and 1(b), a Z-direction guide 5 is disposed on the base 1 in the Z-direction. A Z-direction guide 5A similar to the Z-direction guide 5 is disposed in a negative X-position of the Z-direction guide 5 in the Z-direction. The Z-direction guides 5 and 5A are provided with Z-axis slides 17 and 17A, respectively, that can move in the Z-direction along the Z-direction guides 5 and 5A. As shown in Fig. 1(b), the Z-axis slide 17 is moved in the Z-direction by the drive of a Z-direction drive system (moving device) M1 and held in position. The Z-direction drive system M1 is, for example, an electric motor or hydraulic system. The Z-axis slide 17A is provided with a drive system similar to the Z-direction drive system M1, and is moved in the Z-direction by the drive of this drive system and held in position. The configuration of the Z-axis slide 17A may be the same as or different from that of the Z-direction drive system M1. The Z-axis slides 17 and 17A may be provided with a common Z-direction drive system M1 so that one or both thereof is driven by the common Z-direction drive system.

The Z-axis slides 17 and 17A have X-direction guides 18 and 18A, respectively, thereon. The Z-axis slides 17 and 17A are also provided with X-axis slides 15 and 15A, respectively, that can be moved along the X-direction guides 18 and 18A. The X-axis slide 15 is moved in the X-direction by the drive of an X-direction drive system (moving device) M2 and held in position. The X-direction drive system M2 is, for example, an electric motor or hydraulic system. The X-axis slide 15A is provided with a drive system similar to the X-direction drive system M2, and is moved in the X-direction by the drive of this drive system and held in position. The configuration of the drive system of the X-axis slide 15A may be the same as or different from that of the X-direction drive system M2.

The X-axis slides 15 and 15A have Y-direction guides 16 and 16A, respectively, thereon. The X-axis slides 15 and 15A are also provided with tool post drive units 21 and 21A, respectively, that can be moved along the Y-direction guides 16 and 16A. The tool post drive unit 21 is moved in the Y-direction by the drive of a Y-direction drive system (moving device) M3 and held in position. The Y-direction drive system M3 is, for example, an electric motor or hydraulic system. The tool post drive unit 21A is provided with a drive system similar to the Y-direction drive system M3, and is moved in the Y-direction by the drive of this drive system and held in position. The configuration of the drive system of the tool post drive unit 21A may be the same as or different from that of the Y-direction drive system M3.

The tool post drive units 21 and 21A contain rotation drive units, such as motors. The tool post drive unit 21 has a first turret (tool post) 23 mounted thereon. The first turret 23 can be rotated using the Z-direction as the axis by the drive of the rotation drive unit. Similarly, the tool post drive unit 21A has a second turret (tool post) 23A mounted thereon. The second turret 23A can be rotated using the Z-direction as the axis by the drive of the rotation drive unit. The first turret 23 is disposed over the workpiece W (the positive X side); the second turret 23A is disposed under the workpiece W (the negative X side). The first and second turrets 23 and 23A are disposed in such a manner that the workpiece W is sandwiched therebetween.

The first and second turrets 23 and 23A have, on the circumferential surfaces thereof, multiple holding parts for holding cutting tools T. The cutting tools T are held in all or some of the holding parts. Accordingly, the desired cutting tool T is selected by rotating the first turrets 23 or second turret 23A. The cutting tools T held in the holding parts of the first and second turrets 23 and 23A can be replaced on a holding part basis. The cutting tools T include cutting tools for cutting the workpiece W, as well as rotating tools, such as a drill and an end mill.

A tool head 24 is formed on one of the holding parts of the first turret 23, and a tool head 24A is formed on one of the holding parts of the second turret 23A. The configurations of the tool heads 24 and 24A may be the same or different. The second turret 23A need not be provided with the tool head 24A.

A cutting tool T1 is mounted over the tool head 24 with a holder 25 therebetween. The cutting tool T1 is formed so as to be capable of handling the cylindrical surface Wa of the workpiece W. On the other hand, a cutting tool T is mounted over the tool head 24A with a holder (not shown) therebetween. The cutting tool T may be the same as or different from the cutting tool T1 mounted on the tool head 24.

While, in the machine tool 100 shown in Fig. 1, the cutting tools T and T1 are disposed on the positive and negative X-sides of the workpiece W in such a manner that the workpiece W is sandwiched therebetween, one of these cutting tools may be disposed. Also, while the cutting tools T and T1 are disposed in the X-direction (the vertical direction) of the workpiece W, they may be disposed in the horizontal direction (the Y-direction) of the workpiece W. The workpiece W may be cut using the cutting tools T and T1 in any manner under the control of a controller (not shown). For example, the workpiece W may be cut using one of the cutting tools, or may be cut while alternately using both, or may be cut using both simultaneously.

While, in Fig. 1, the first and second turrets 23 and 23A are used as tool posts, other types of tool posts may be used. For example, comb-shaped tool posts may be used. If comb-shaped tool posts are used, cutting tools T are held on the teeth of each comb-shaped tool post, and one of the cutting tools T is selected by moving the comb-shaped tool post in the direction in which the teeth are arranged.

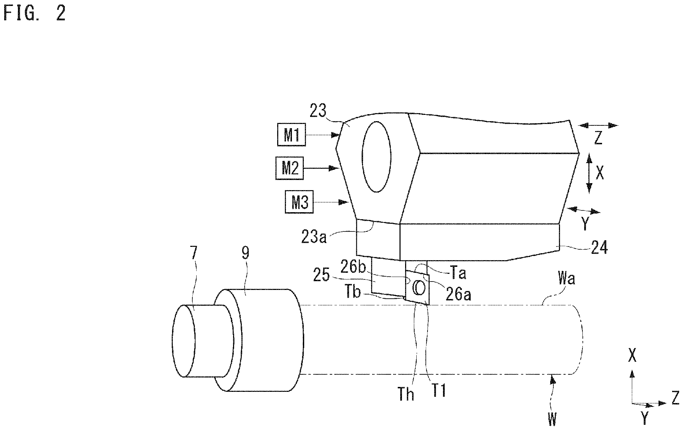

Fig. 2 is an enlarged perspective view of a major part including the main spindle 7 and first turret 23, which is a part corresponding to the workpiece W. As shown in Fig. 2, the tool head 24 is detachably mounted on the negative-X-side surface 23a of the first turret 23. The holder 25 holding the cutting tool T1 is mounted on the negative X-side of the tool head 24. The cutting tool T1 held by the holder 25 is disposed in such a manner that a linear cutting blade Th is along a YZ-plane parallel with the rotation axis of the workpiece W. Details of the holder 25 and cutting tool T1 will be described later.

The cutting tool T1 is positioned in the X-direction by driving the X-direction drive system M2. Thus, the amount of cutting of the workpiece W is determined. Also, by driving the Z-direction drive system M1, X-direction drive system M2, and Y-direction drive system M3, the cutting tool T1 can be moved relative to the workpiece W along with the first turret 23 and tool head 24 in one of the Z-direction, X-direction, and Y-direction or in a combined direction of two or more of these directions.

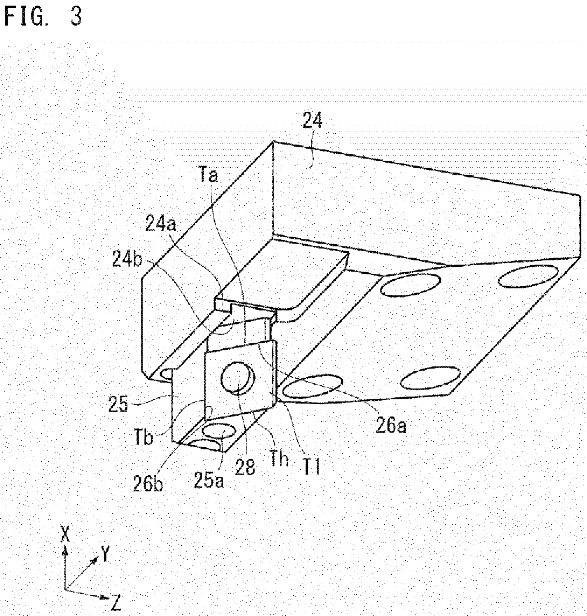

Fig. 3 is a perspective view showing an example of a state in which the holder 25 is mounted on the tool head 24. As shown in Fig. 3, a guide 24a for positioning the holder 25 and a holder contact surface 24b are formed on the negative X-side of the tool head 24. The guide 24a extends in the Y-direction and is formed in a shape and size corresponding to the external shape of the holder 25. The guide 24a defines the positions of the holder 25 in the Y- and Z-directions and the posture of the holder 25 in the direction of rotation about the X-axis. The holder contact surface 24b is formed in a plane shape and in parallel with the YZ-plane. The holder contact surface 24b is in contact with the holder 25 and defines the position of the holder 25 in the X-direction and the posture of the holder 25 with respect to the YZ-plane.

The holder 25 is mounted on the tool head 24 by screwing bolts (not shown) into two holes 25a formed from a negative X-side surface thereof in the X-direction. The cutting tool T1 is fixed to the holder 25 with a bolt 28 therebetween. A positive-X-side first surface Ta of the side surfaces of the cutting tool T1 is in contact with a first reference surface 26a of the holder 25, and a negative-Y-side second surface Tb of the side surfaces of the cutting tool T1 is in contact with a second reference surface 26b of the holder 25. These surfaces will be described later. The linear cutting blade Th of the cutting tool T1 fixed to the holder 25 is disposed along the YZ-plane. The linear cutting blade Th is inclined with respect to the Z-direction when seen from the X-direction.

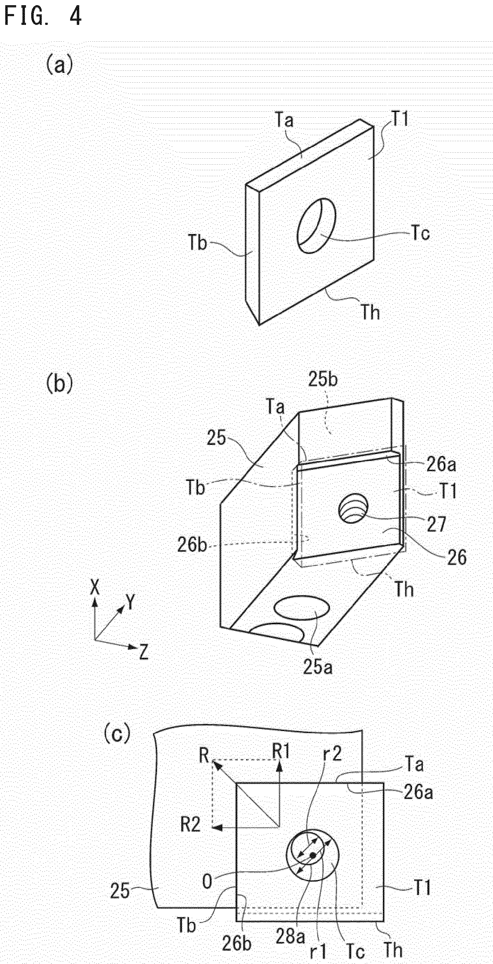

Fig. 4(a) is a perspective view showing an example of the cutting tool T1. As shown in Fig. 4(a), the cutting tool T1 is, for example, a replaceable throw-away tip, but not limited thereto. The cutting tool T1 is formed in a rectangular plate. The cutting tool T1 has the linear cutting blade Th on the negative X-side thereof. The positive-X-side first surface Ta of the side surfaces of the cutting tool T1 is formed in parallel with the linear cutting blade Th. The negative-Y-side second surface Tb of the side surfaces of the cutting tool T1 is formed perpendicularly to the linear cutting blade Th. The first surface Ta and second surface Tb are disposed perpendicularly to each other. The cutting tool T1 has, approximately in the center thereof, a through hole Tc which is larger than the diameter of a thread 28b [see Fig. 4(c)] of the bolt 28.

Fig. 4(b) is a perspective view showing an example of the holder 25. As shown in Fig. 4(b), the holder 25 has a third reference surface 25b on the positive X-side thereof. The third reference surface 25b is disposed in parallel with the YZ-plane and is in contact with the holder contact surface 24b of the tool head 24. Thus, the linear cutting blade Th of the cutting tool T1 fixed to the holder 25 is accurately disposed along the YZ-plane. Note that the holder contact surface 24b or third reference surface 25b need not be disposed in parallel with the YZ-plane. For example, these surfaces may be inclined with respect to the YZ-plane, for example, by tapering them. These surfaces may have any shape as long as the linear cutting blade Th can be accurately disposed in parallel with the YZ-plane.

The holder 25 has a support surface 26 which is in contact with the back surface of the cutting tool T1. The support surface 26 has a screw hole 27 corresponding to the bolt 28 for fixing the cutting tool T1. The support surface 26 is formed so as to be inclined with respect to the Z-direction when seen from the X-direction and defines the ridge-line direction of the linear cutting blade Th. The holder 25 also has the first reference surface 26a in contact with the first surface Ta of the cutting tool T1 and the second reference surface 26b in contact with the second surface Tb thereof. These reference surfaces are joined to the support surface 26. The first reference surface 26a and second reference surface 26b are formed, for example, by recessing the support surface 26 of the holder 25. The first reference surface 26a is formed in parallel with the YZ-plane or a plane tangent to the peripheral surface of the workpiece W. Accordingly, the first reference surface 26a is disposed in parallel with the third reference surface 25b. The second reference surface 26b is formed in a plane shape and disposed perpendicularly to the first reference surface 26 and third reference surface 25b.

Fig. 4(c) shows a state in which the cutting tool T1 is mounted on the holder 25. As shown in Fig. 4(c), the cutting tool T1 is fixed to the support surface 26 using the bolt 28 with the first surface Ta in contact with the first reference surface 26a and with the second surface Tb in contact with the second reference surface 26b. The through hole Tc of the cutting tool T1 is formed in such a manner that the inner diameter r1 thereof is larger than the outer diameter r2 of a thread 28a of the bolt 28. Thus, even when the external shape of the cutting tool T1 varies to some extent, the cutting tool T1 can be fixed to the holder 25 with the first surface Ta and second surface Tb in contact with the first reference surface 26a and second reference surface 26b, respectively. Note that the thread 28b may be shifted from the central portion O of the cutting tool T1.

The machine tool 100 of the present embodiment can cut the workpiece W while moving the cutting tool T1. In this case, the respective portions of the linear cutting blade Th of the cutting tool T1 sequentially contact the workpiece W, starting from one end of the cutting blade and ending with the other end. For example, as shown in Fig. 4(c), when the portions of the linear cutting blade Th contact the workpiece W, starting from the right end, a combined reaction force R of a reaction force R1 in the positive X-direction and a reaction force R2 in the negative Z-direction acts on the cutting tool T1.

The first reference surface 27a and second reference surface 27b are disposed in positions that receive the reaction force R. With regard to the reaction force R, the first reference surface 26a of the holder 25 receives the reaction force R1 in the X-direction, and the second reference surface 26b receives the reaction force R2 in the Z-direction. Thus, the cutting tool T1 can be strongly held by the holder 25 and prevented from being shifted during cutting. Since the cutting tool T1 is fixed using the single bolt, 28, it can be easily demounted from the holder 25 by removing the bolt 28.

Next, the operation of the machine tool 100 thus configured will be described. First, the main spindle 7 is caused to hold the workpiece W to be machined. After grasping the workpiece W, the motor 12 is driven, thereby rotating the main spindle 7 and thus rotating the workpiece W. Note that when the main spindle 7 and counter spindle 8 are caused to grasp the workpiece W, these spindles are rotated synchronously. The number of revolutions of the workpiece W is set in accordance with the machining process as appropriate.

Then, the first turret 23 is rotated, and the cutting tool T1 is selected. Note that prior to selecting the cutting tool T1, the cutting tool T1 is mounted on the holder 25, and the holder 25 is mounted on the tool head 24 of the first turret 23. In mounting the cutting tool T1 on the holder 25, the cutting tool T1 is fixed to the support surface 26 by fastening the bolt 28 with the linear cutting blade Th oriented downward, with the first surface Ta in contact with the first reference surface 26a, and with the second surface Tb in contact with the second reference surface 26b as described above. The holder 25 is mounted on the tool head 24 using a bolt (not shown) or the like. Thus, the linear cutting blade Th is disposed in a direction parallel with the YZ-plane and disposed so as to be inclined with respect to the Z-direction when seen from the X-direction.

Then, the position of the cutting tool T1 in the X-direction is adjusted so that the linear cutting blade Th of the cutting tool T1 handles the cylindrical surface Wa of the workpiece W. This adjustment is made by moving the tool rest drive unit 21 in the X-direction using the X-direction drive system M2. The position of the linear cutting blade Th in the X-direction determines the amount of cutting of the cylindrical surface Wa of the workpiece W. The amount of cutting may be set to a predetermined value by a controller (not shown), or may be set by the operator manually.

When the rotation of the workpiece W is stabilized, the cylindrical surface Wa of the workpiece W is cut using the cutting tool T1. In the cutting process, The XYZ coordinate position to which the linear cutting blade Th of the cutting tool T1 is moved is set, for example, by the movement of the Z-axis slide 17 in the Z-direction and the movement of the tool head 24 in the Y-direction. These movements are made by the drive of the Z-direction drive system M1 and Y-direction drive system M3, respectively.

In an example of the present embodiment, the workpiece W is cut by moving the linear cutting blade Th of the cutting tool T1 in the Y-direction, which is the tangential direction of the cylindrical surface Wa of the workpiece W. This movement of the cutting tool T1 in the Y-direction is made, for example, on the basis of machining information (machining recipe) preset in a storage unit or the like of the controller (not shown). Note that this movement of the cutting tool T1 may be made by the operator manually.

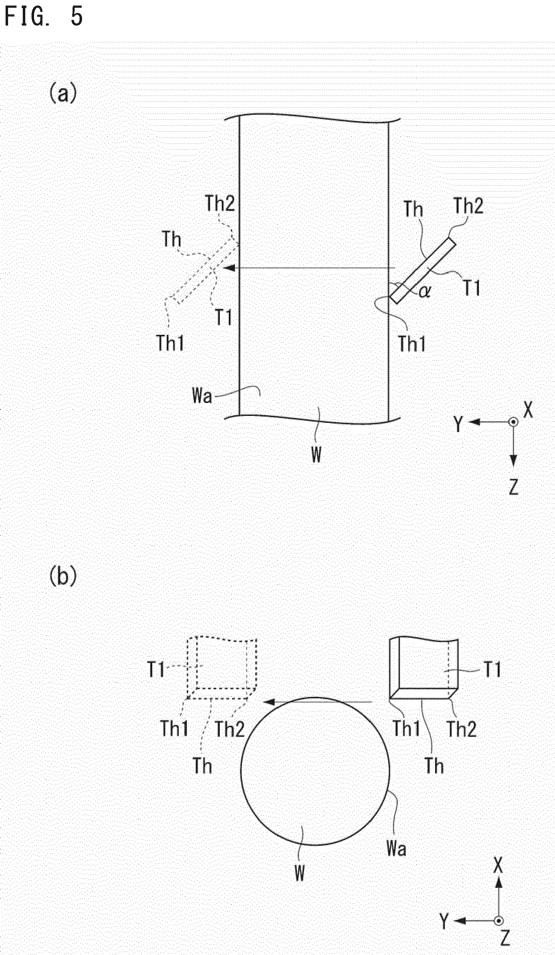

Fig. 5(a) shows the operation of the cutting tool T1 (the linear cutting blade Th) when the workpiece W is seen in the negative X-direction, and Fig. 5(b) shows the operation of the cutting tool T1 (the linear cutting blade Th) when the workpiece W is seen in the negative Z-direction. As shown in Fig. 5(a), the angle of the linear cutting blade Th of the cutting tool T1 with respect to the Z-direction is set to α. Accordingly, when the linear cutting blade Th is moved from the negative Y-side to the positive Y-side of the workpiece W, the positive Z-side of the linear cutting blade Th contacts the workpiece W first.

As shown in Figs. 5(a) and 5(b), the workpiece W is cut by moving the linear cutting blade Th in the positive Y-direction. The direction of this movement serves as a track along a tangent plane to the cylindrical surface Wa of the workpiece W. First, a positive Z-side first end Th1 of the linear cutting blade Th contacts and cuts the cylindrical surface Wa. Then, the linear cutting blade Th is moved along the cylindrical surface Wa in the positive Y-direction. Thus, the cut portion of the workpiece W is gradually shifted from the first end Th1 toward a second end Th2 in the negative Z-direction. As seen above, the linear cutting blade Th moves in the Y-direction, whereas the cut portion of the cylindrical surface Wa of the workpiece W moves in the Z-direction. As described above, the reaction force when cutting the workpiece W using the cutting tool T1 is received by the first reference surface 27a and second reference surface 27b of the holder 25 and thus the posture of the cutting tool T1 is stabilized. Thus, the workpiece W can be cut while keeping the linear cutting blade T parallel with the YZ-plane.

When the second end Th2 of the linear cutting blade Th leaves the cylindrical surface Wa, the cutting of the cylindrical surface Wa completes. While the cylindrical surface Wa is cut using all the portions of the linear cutting blade Th from the first end Th1 to second end Th2 as described above, the cylindrical surface Wa may be cut using some portions of the linear cutting blade Th.

While the example in which the workpiece W is cut using the cutting tool T1 of the first turret 23 has been described above, the cutting tool T (see Fig. 1) of the second turret 23A may be additionally used when cutting the workpiece W. In this case, the cylindrical surface Wa may be cut using the cutting tool T of the second turret 23A while moving the cutting tool T along a track similar to that of the cutting tool T1 on the negative X-side of the workpiece W. When cutting the cylindrical surface Wa using both the cutting tools T1 and T, the cutting tools may cut the same orbital portion of the cylindrical surface Wa in different amounts, or may cut different portions of the cylindrical surface Wa. When the cutting of the workpiece W completes, the workpiece W is released from the grasping claws 9a and taken out.

As seen above, during cutting, the machine tool 100 of the present embodiment moves the cutting tool T1 in the Y-direction with the first surface Ta and second surface Tb of the cutting tool T1 in contact with the first reference surface 26a and second reference surface 26b, respectively, of the holder 25. Thus, the machine tool 100 can easily position the cutting tool T1 with respect to the holder 25 and accurately dispose the linear cutting blade Th in parallel with the YZ-plane. Further, the cutting tool T1 is strongly held by the holder 25 due to its contact with the first reference surface 26a and second reference surface 26b of the holder 25. Thus, the cutting tool T1 can be fixed using the single bolt, 28, or the like and easily mounted or demounted. Further, there is no need to form a keyway or protrusion in the cutting tool T1 or holder 25 and therefore the production cost of the holder 25, cutting tool T1, and the like can be reduced.

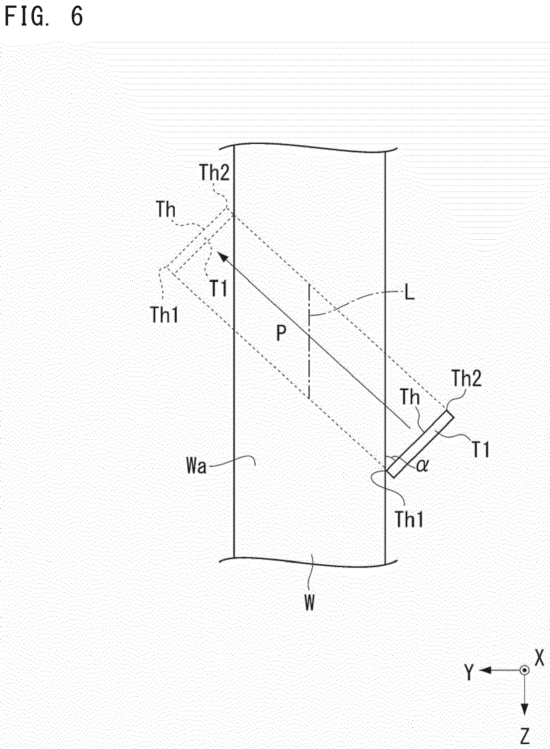

While the example in which the workpiece W is cut while moving the linear cutting blade Th of the cutting tool T1 along the cylindrical surface Wa of the workpiece W in the Y-direction has been described with reference to Fig. 5, the workpiece W may be cut in other manners. Fig. 6 is a diagram showing another example of the cutting operation (the operation of the linear cutting blade Th of the cutting tool T1) when the workpiece W is seen in the negative X-direction.

As shown in Fig. 6, the workpiece W is cut while moving the linear cutting blade Th of the cutting tool T1 along the cylindrical surface Wa of the workpiece W in the Z-direction, as well as in the Y-direction, which is the tangential direction of the cylindrical surface Wa. This movement of the cutting tool T1 in the Y and Z-directions may be performed on the basis of machining information (machining recipe) preset in a storage unit or the like of the controller (not shown), or by the user manually.

In this case, the workpiece W is cut by moving the linear cutting blade Th in a combined direction P of the Y-and Z-directions as shown in Fig. 6. The combined direction P serves as a track along a tangent plane to the cylindrical surface Wa of the workpiece W. First, the positive-Z-side first end Th1 of the linear cutting blade Th contacts and cuts the cylindrical surface Wa. Then, the linear cutting blade Th is moved along the cylindrical surface Wa in the combined direction P. Thus, the cut portion of the workpiece W is gradually shifted from the first end Th1 toward the second end Th2 in the negative Z-direction. As seen above, the linear cutting blade Th moves in the Y-direction, whereas it moves in the Z-direction while contacting the cylindrical surface Wa of the workpiece W along a straight line L.

When the second end Th2 of the linear cutting blade Th leaves the cylindrical surface Wa (when the second end Th2 reaches the negative-Z-side end of the straight line L), the cutting completes. The length (straight line L) over which the workpiece W is cut by the linear cutting blade Th is the sum of the length of the linear cutting blade Th in the Y-direction and part of the movement length of the linear cutting blade Th in the Z-direction. Accordingly, the length of the straight line L varies with the angle α of the linear cutting blade Th with respect to the Z-direction, the length of the linear cutting blade Th from the first end Th1 to the second end Th2, or the orientation of the combined direction P. For example, the straight line L becomes longer than that shown in Fig. 6 when the angle of the linear cutting blade Th is made smaller than α, or when the linear cutting blade Th is made longer, or when the angle of the combined direction P with respect to the Z-direction is made smaller.

The combined direction P can be changed by adjusting the Y-direction speed and Z-direction speed of the combined direction P. The Y-direction speed and Z-direction speed need not be constant. For example, the length of the straight line L may be increased by reducing the Y-direction speed or increasing the Z-direction speed from the time point when the first end Th1 of the linear cutting blade Th contacts the workpiece W to the time point when the second end Th2 leaves the workpiece W.

The combined direction P need not be the combined direction of the Y- and Z-directions and may be, for example, a combined direction of the Y- and X-directions or a combined direction of the Y-, X-, and Z-directions. While the linear cutting blade Th is moved in the X-, Y-, and Z-directions by driving the Z-direction drive system M1, X-direction drive system M2, and Y-direction drive system M3, the workpiece W may be moved in some or all of these directions instead.

### <Second Embodiment>

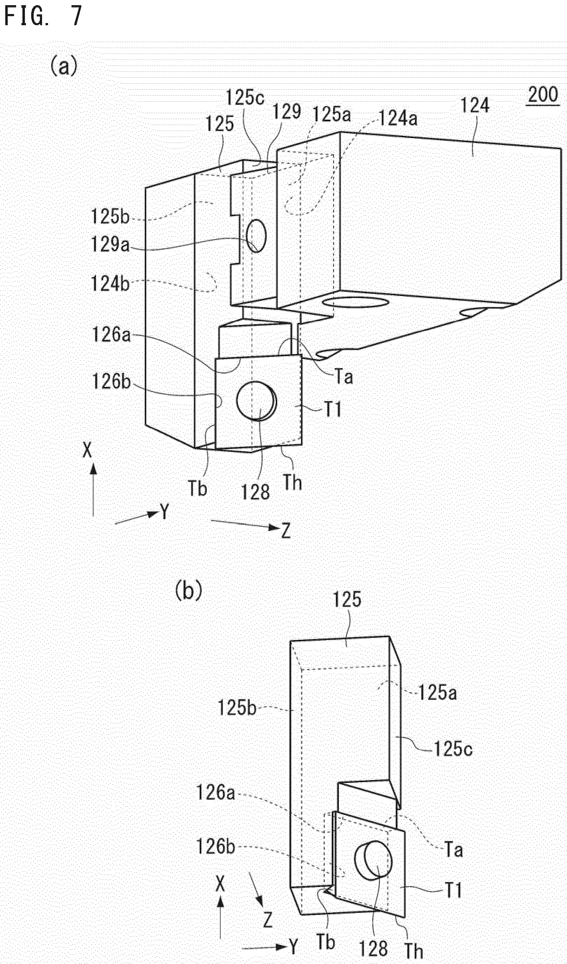

A machine tool 200 of a second embodiment will be described. Fig. 7 includes diagrams showing an example of a major part of the machine tool 200 of the second embodiment, in which Fig. 7(a) is a perspective view showing an example of a cutting tool T1 and a holder; and Fig. 7(b) is a perspective view showing an example of a holder. Note that elements not shown in Fig. 7 are similar to those of the machine tool 100 shown in Fig. 1.

As shown in Fig. 7(a), a holder 125 is fixed to a tool head 124. As with the tool head 24 of the first embodiment, the tool head 124 is mounted on a tool post, such as a first turret 23, using a bolt or the like. The tool head 124 has a recess on the negative Z-side thereof and has a clamp contact surface 124a and a holder contact surface 124b which are opposed to each other in the Y-direction. The interval between the clamp contact surface 124a and holder contact surface 124b is set to a length into which the holder 125 and a clamp member 129 can be inserted.

The clamp contact surface 124a is formed on the positive Y-side of the recess and in parallel with the XZ plane. The holder contact surface 124b is formed on the negative Y-side of the recess and in parallel with the XZ plane as well. Accordingly, the clamp contact surface 124a and holder contact surface 124b are disposed in parallel. The positive-Z-side surface (not shown) of the recess is a surface in contact with the holder 125 and is formed in parallel with the XY plane. Further, a screw hole (not shown) is formed on the positive Z-side of the recess, and a bolt for fixing the clamp member 129 is screwed into the hole. The holder contact surface 124b and the positive-Z-side surface of the recess are in contact with the holder 125 and define the positions of the holder 25 in the X- and Y-directions and the posture of the holder 125 with respect to the YZ-plane.

As shown in Figs. 7(a) and (b), the holder 125 is formed in a quadrangular prism shape and has a positive-Z-side back surface 125a, a negative-Y-side third reference surface 125b, and a positive-Y-side clamp surface 125c. The back surface 125a is in contact with the positive-Z-side surface of the recess of the tool head 124 and is formed in parallel with the XY plane. The third reference surface 125b is in contact with the holder contact surface 124b of the recess and is formed in parallel with the XZ plane. The clamp surface 125c is spaced from the clamp contact surface 124a of the recess and is formed in parallel with the XZ plane. The back surface 125a and third reference surface 125b are in contact with the tool head 124 and thus the holder 125 is positioned with respect to the tool head 124.

The cutting tool T1 is mounted on a support surface (not shown) formed on the holder 125. This support surface has a screw hole (not shown) corresponding to a bolt 128 for fixing the cutting tool T1. When the cutting tool T1 is mounted on the holder 125, the ridge-line direction of a linear cutting blade Th is inclined with respect to the Z-direction when seen from the X-direction. As in the first embodiment, the outer diameter of the thread of the bolt 128 is smaller than the inner diameter of a through hole Tc (see Fig. 4) of the cutting tool T1.

The holder 125 has a first reference surface 126a in contact with a first surface Ta of the cutting tool T1 and a second reference surface 126b in contact with a second surface Tb thereof. The first reference surface 126a is formed in parallel with the YZ-plane. Accordingly, the first reference surface 126a is disposed perpendicularly to the back surface 125a and third reference surface 125b. The second reference surface 126b is formed in a plane shape and disposed perpendicularly to the first reference surface 126a. As in the first embodiment, the first reference surface 126a and second reference surface 126b are disposed in positions that receive a reaction force when cutting the workpiece W.

As in the first embodiment, the cutting tool T1 is fixed to the holder 125 by fastening the bolt 128 with the linear cutting blade Th oriented downward, with the first surface Ta of the cutting tool T1 in contact with the first reference surface 126a, and with the second surface Tb in contact with the second reference surface 126b.

As shown in Fig. 7(a), the holder 125 is fixed to the tool head 124 using the clamp member 129 with the third reference surface 125b in contact with the holder contact surface 124b of the recess of the tool head 124 and with the back surface 125a in contact with the positive Z-surface of the recess. The clamp member 129 is inserted between the clamp surface 125c of the holder 125 and the clamp contact surface 124a of the recess of the tool head 124. A cross-section of the clamp member 129 parallel with the YZ-plane is formed in a wedge. The clamp member 129 is fixed by inserting a bolt into a through hole 129a and then screwing the bolt into a screw hole of the tool head 124.

By fastening the bolt, the clamp member 129 moves in the insertion direction and presses the holder 125 against the holder contact surface 124b. Thus, the holder 125 is positioned with respect to the tool head 124 and fixed thereto. The first surface Ta of the cutting tool T1 fixed to the holder 125 is in contact with the first reference surface 126a of the holder 125. The first reference surface 126a is disposed perpendicularly to the third reference surface 125b of the holder 125 and is in contact with the first surface Ta, which is parallel with the linear cutting blade Th. Thus, the linear cutting blade Th of the cutting tool T1 held by the tool head 124 is accurately disposed along the YZ-plane.

As seen above, as in the first embodiment, the machine tool 200 of the second embodiment can accurately dispose the linear cutting blade Th along the YZ-plane. Further, the cutting tool T1 can be easily mounted or demounted, and the production cost of the holder 125 and the like can be reduced. In the second embodiment, the holder 125 is fixed to the tool head 124 using the clamp member 129. Thus, compared to the configuration in which the holder 125 is fixed to the tool head 124 using multiple bolts or the like, the holder 125 can be easily mounted or demounted by simply operating the clamp member 129. Note that in the second embodiment, the workpiece W is cut as is done in the first embodiment.

While the embodiments have been described above, the present invention is not limited thereto. Various changes can be made to the embodiments without departing from the spirit and scope of the invention. For example, while the configurations in which the first reference surfaces 26a, 126a and second reference surfaces 26b, 126b are disposed in positions that receive the reaction force R when cutting the workpiece W have been described in the embodiments, other configurations may be employed. For example, only one of the first and second reference surfaces may be disposed in a position that receives the reaction force R.

While, in the above embodiments, the first turret 23 can move in the three directions, the Z-, X-, and Y-directions, other configurations may be employed. For example, the following configuration may be employed: the first turret 23 can move in two directions, the Z- and X-directions; and the tool heads 24, 124 can move in the Y-direction with respect to the first turret 23. In this case, the first turret 23 may be provided with a different drive system. The same applies to the second turret 23A.

### Description of Reference Signs

M1...Z-direction drive system (moving device) M2...X-direction drive system (moving device) M3...Y-direction drive system (moving device) T1...cutting tool Ta...first surface Tb...second surface Tc...through hole Th...linear cutting blade R...reaction force W...workpiece 7...main spindle 23...first turret (tool post) 24, 124...tool head 25, 125...holder 25b, 125b...third reference surface 26a, 126a...first reference surface 26b, 126b...second reference surface 28...bolt 28a...thread 100, 200...machine tool

## Claims

1. A machine tool comprising:
a main spindle configured to rotate while holding a workpiece;
a moving device configured to move a rectangular plate-shaped cutting tool relative to the workpiece at least in a Y-direction of a Z-direction, the Y-direction, and an X-direction or in a combined direction of the Y-direction and the Z-direction, the cutting tool being provided with a linear cutting blade for cutting the workpiece, the Z-direction being parallel with an axis of the main spindle, the X-direction being perpendicular to the Z-direction and determining the amount of cutting of the workpiece, the Y-direction being perpendicular to the Z-direction and the X-direction; and
a holder holding the cutting tool in a state in which an orientation of the linear cutting blade is inclined with respect to the Z-direction when seen from the X-direction, wherein
the holder has a first reference surface and a second reference surface, the first reference surface being in contact with a first surface parallel with the linear cutting blade, of side surfaces of the cutting tool provided with the linear cutting blade, the first reference surface being parallel with a YZ-plane or a plane tangent to a cylindrical surface of the workpiece, the second reference surface being in contact with a second surface intersecting the first surface, of the side surfaces of the cutting tool; and
the workpiece is cut while moving the linear cutting blade along the YZ-plane or a plane parallel with the plane tangent to the cylindrical surface of the workpiece at least in the Y-direction or in the combined direction using the moving device.

2. The machine tool of Claim 1, wherein at least one of the first reference surface and the second reference surface is disposed in a position that receives a reaction force when cutting the workpiece.

3. The machine tool of Claim 1 or 2, wherein
the holder is held over a tool post with a tool head therebetween, the tool post being moved by the moving device, and has a third reference surface in contact with the tool head; and
the third reference surface is disposed so as to correspond to the first reference surface.

4. The machine tool of Claim 3, wherein the third reference surface is disposed in parallel with or perpendicularly to the first reference surface.

5. The machine tool of any one of Claims 1 to 4, wherein the holder is provided with a bolt for fixing the cutting tool; and
the cutting tool has a larger through hole than a diameter of a thread of the bolt.
